# EUROPÄISCHE PATENTANMELDUNG

(11) **EP 1 118 273 A1**
(43) Veröffentlichungstag der Anmeldung: **25.07.2001**
(21) Anmeldenummer: 98963680.8
(22) Anmeldetag: 16.11.1998
(51) Int. Cl.: A23L 1/16

(54) **VERFAHREN ZUR HERSTELLUNG VON ARTIKELN DES MAKARONITYP**

(30) Priorität: 17.09.1998 RU 98117113
(71) Anmelder: Kalnish, Grigory Izeslavovich, Tver, 170000 (RU)
(72) Erfinder: KALNISH, Grigory Izeslavovich, Tver, 170000 (RU); ANTONOV, Vladimir Mikhailovich, Krasnoyarsk, 660036 (RU); POTAPOV, Sergei Stepanovich, Tver, 170000 (RU); SMIRNOV, Sergei Mikhailovich, Tver, 170000 (RU)
(74) Vertreter: Goddar, Heinz J., Dr.
(86) Internationale Anmeldenummer: RU9800382
(87) Internationale Veröffentlichungsnummer: WO0015046

(57) **Zusammenfassung**

Zuerst werden im Wasser volle Weizenkörner bis zur Ankeimung eingequellt. Das überflüssige Wasser, das durch die Körner nicht gebunden wurde, wird abgezogen und die Körner werden zu einer Wassersuspension der Kornmasse mit der Teilchengröße von höchstens 500 Mikrometer zerkleinert. Das Weizenmehl wird mit dem Wasser der Kornmassesuspension angefeuchtet, indem es beim Teigkneten nach und nach der Wassersuspension von Kornmasse zugefüg wird. Vor der Zerkleinerung können die Weizenkeime noch einmal zusätzlich mit Wasser abgespült werden. Das Wasser wird anschließend entfernt, indem man es abtropfen lässt.

Als Weizen können sowohl harte als auch weiche Mahlweizensorten verarbeitet werden und als Weizenmehl können sowohl Teigwarenmehl, als auch Weizenbackmehl, dessen Feuchtigkeit nicht mehr als 14,5%, Weißfarbigkeit nicht weniger als 42 Messeinheiten und Klebrigkeit nicht weniger als 28% betragen, verarbeitet werden.

## Beschreibung

### Technischer Bereich

Die Erfindung gehört zum Bereich der Nahrungsmittelindustrie und kann für die Anfertigung und Produktion von Teigwaren mit erhöhtem biologischem Nährwert aus Weizen und auch aus Brotweizen eingesetzt werden.

### Der ursprüngliche Produktionsstand

Es ist ein Herstellungsverfahren von Teigwaren (z.B. Fadennudeln) bekannt, dass das Vermischen von Weizenmehl, wachsartigem Hybridmais-Mehl, das mindestens 95% Aminopektin in der Stärkefraktion enthält, sowie Wasser und anderer im Rezept genannter Komponente vorsieht. Die Fertige Mischung wird geformt und die Produkte werden gebacken und/oder getrocknet. (Patent der UdSSR Nr. 1593559, A 21 D 13/04, 1990 (Analoge)).

Dem Wesen der zur Anmeldung gestellten Erfindung liegt das unten folgende Produktionsverfahren von Teigwahren am nächsten. Dem mit Wasser angefeuchteten Mehl werden die im Rezept vorgesehenen Komponente beigemischt und daraus wird ein Teig von bestimmter Konsistenz geknetet. Aus dem fertigen Teig werden Teigwaren geformt und anschließend getrocknet (Technologie und Ausrüstung der Nahrungsmittelindustrie / Lehrbuch / Verfasser Dr.habil. N.I.Nasarowa, Verlag: Nahrungsmittelindustrie, Moskau, 1977, 214 S. (Prototyp)).

Zu den Mängeln der Teigwarenproduktion gehören relativ niedriger biologischer Nährwert von Teigwaren und deren relativ hohe Selbstkosten. Das geschieht, weil das nach den modernen Technologien angefertigte Mehl solche Komponenten, wie die unentbehrlichen Aminosäuren, Vitamine, Mikroelemente und Nahrungsstofffasern nicht, bzw. nur in geringen Mengen enthält. Andererseits steigen die Mehlkosten mit der Erhöhung der Mehlqualität an, während der biologische Nährwert der daraus angefertigten Produkte sinkt.

### Erschließung der Erfindung

Die Erfindung soll zur Erweiterung des Teigwarensortiments mit hohem Nährwert und niedrigen Selbstkosten beitragen.

Nahrungsmittel (vorwiegend Teigwaren), bei deren Produktion die Spitzenqualitäten von Mehl benutzt werden zeichnen sich durch niedrigen Nährwert, unter anderem auch niedrigen biologischen Nährwert aus. Sie besitzen unter allen anderen Mehlsorten die geringste Quote an Vitaminen, Mineralelementen, Nahrungsstoffasern, die zu den wichtigsten und meistens unentbehrlichen Nahrungskomponenten gehören. Darum halten sowohl Fachleute, die sich mit Problemen der Ernährung beschäftigen, als auch Ärzte die Erarbeitung von Produktionsverfahren, die es erlauben würden, alle Komponente des Weizenkorns im Fertigprodukt beizubehalten für äußerst aussichtsreich. Bei solchen Produktionsverfahren sollten auch nach Möglichkeit die Weizensorten benutzt werden, die in unserem Land am weitesten verbreitet sind. Außerdem wird zur Teigwarenherstellung nur spezifisches Mehl (Grieß) aus harten Weizensorten bzw. aus ultraglasigem Brotweizen benutzt. Diese Weizensortene sind nur in einzelnen Anpflanzungsgebieten, z.B. in Kanada, vertreten. Benutzt man aber zur Teigwarenproduktion Mahlweizenmehl, das man aus den weit verbreiteten weichen Weizensorten erzeugt, so führt das zur schlechteren Qualität der Teigwaren, die beim Kochen ihre Form verlieren und zerfallen.

Das technische Ergbnis der Erfindung ist die Erzeugung von Teigwaren mit hohem biologischem Nährwert und niedrigen Selbstkosten, sowie auch Erweiterung der Rohstoffbasis der Teigwarenindustrie.

Das oben genannte technische Ergebnis wird durch Folgendes erzielt. Das bereits bekannte Produktionsverfahren von Teigwaren, wo aus dem mit Wasser angefeuchteten Mehl ein Teig von bestimmter Konsistenz geknetet, zu Teigwaren geformt und anschließend getrocknet wird, wird nun durch das in der Erfindung erarbeitete Verfahren ergänzt. Zunächst werden im Wasser ganze Weizenkörner eingequellt. Das Einquellen erfolgt bis die Körner Keime treiben. Das Wasser, das nicht durch die Körner gebunden wurde, wird abgezogen und die Körner werden zu einer mit Wassersuspension gebundenen Kornmasse zerkleinert. Die Teilchengröße der Kornmasse darf nicht mehr als 500 Mikrometer betragen. Das Weizenmehl wird mit der Wassersuspension der Kommasse angefeuchtet, indem das Weizenmehl beim Teigkneten nach und nach zu der Kornmasse dazugeschüttet wird.

Als Rohstoff werden dabei harte und/oder weiche Sorten von Mahlweizen verarbeitet.

Als Weizenmehl werden Backmehl, dessen Feuchtigkeit nicht mehr als 14,5%, Weißfarbigkeit nicht weniger als 42 Messeinheiten und Kleberigkeit nicht weniger als 28% betragen, und/oder Teigwarenmehl verarbeitet.

Vor der Zerkleinerung spült man das Korn noch zusätzlich mit Wasser ab und lässt dann das Wasser frei abtropfen.

Das kennzeichnende Merkmal des angemeldeten Verfahrens besteht darin, dass man vor dem Vermischen mit dem Mehl volle Weizenkörner im Wasser einquellt, bis sie Keime treiben, d.h. die Körner werden zur Anfangsstadie ihrer Keimbildung gebracht. Das Wasser, das durch die Körner nicht gebunden wurde, wird abgezogen, d.h. der Überfluss an Wasser wird entfernt, während feuchte Körner zu einer mit Wassersuspension gebundenen Kornmasse mit der Teilchengröße nicht mehr als 500 Mikrometer zerkleinert werden.

Das kennzeichnende Merkmal des angemeldeten Verfahrens besteht auch darin, dass während der Teigknetung das Weizenmehl nur mit Wassersuspension der Kornmasse angefeuchtet wird, indem man das Weizenmehl nach und nach der Kornmasse hinzumischt.

Das kennzeichnende Merkmal des angemeldeten Verfahrens besteht auch darin, dass man als Weizen, dessen Körner vorher eingequellt wurden, sowohl die in der Teigwarenproduktion traditionell gebrauchten harten Weizensorten und ultraglasige Brotweizensorten als auch die weit verbreiteten Mahlweizensorten verarbeiten kann.

Das kennzeichnende Merkmal des angemeldeten Verfahrens besteht auch darin, dass außer dem in der Teigwarenproduktion traditinell gebrauchtem Teigwarenmehl als Weizenmehl auch Backmehl, dessen Feuchtigkeit nicht mehr als 14,5%, Weißfarbigkeit nicht weniger als 42 Messeinheiten und Kleberigkeit nicht weniger als 28% betragen, sowie auch Teigwarenmehl verarbeiten kann.

Das kennzeichnende Merkmal des angemeldeten Verfahrens besteht auch darin, dass man die Weizenkörner vor der Zerkleinerung zusätzlich abspült und dann das Wasser frei abtropfen lässt.

Zerkleinerte Weizenkörner, die als eine der Hauptbestandteile des Teiges bei der Teigwarenproduktion benutzt werden, erlauben es dem Fertigprodukt solche Weizenkornkomponenten wie die unentbehrlichen Aminosäuren, Vitamine, Mikroelemente und Nahrungsstofffasern bezufügen, und zwar in gleichen Verhältnis, wie diese Komponenten unter natürlichen Umständen während der Ankeimungsphase im Korn existieren. Genau das garantiert den biologischen Nährwert der Teigwaren und deren gesungheitlichen Nutzen für den Menschen.

Außerdem wird der biologische Nährwert der Teigwaren, die nach dem angemeldeten Produktionsverfahren angefertigten worden sind, auch durch die vorgeschlagene schonende Verarbeitungsmethode des Korns erhöht: volle Weizenkörner, die vorher im Wasser eingequellt wurden, werden zur Keimbildung gebracht und z.B. in einer Dispergierungsanlage zerkleinert, bis die Teilchengröße der Kornmasse nicht mehr als 500 Mikrometer aufweist. Dadurch werden die im Korn enthaltenen und für den menschlichen Organismus nützlichen Stoffe praktisch vollständig aufrecht erhalten. Außerdem geht im angekeimten Korn, d.h. im Korn, das zum Ankeimungsstadium gebracht wurde, die Aktivisierung von Fermenten vor sich, was den Wert der Teigwaren zusätzlich positiv beeinflusst.

Im Vergleich zu dem bereits bekannten traditionell genutzten Teigwaren-Produktionsverfahren, das genaue Dosierung von Mehl und besonders Wasser vor der Vermischung von Teigkomponenten verlangt, brauchen im angemeldeten Verfahren solch strenge Forderungen nicht erfüllt zu werden, da das Korn selbst während der Quellzeit die optimale Wassermenge in sich aufnimmt. Die nachfolgende Kornzerkleinerung erlaubt die optimale Menge der flüssigen Fraktion für die vorgesehene Kornmenge in der fertigen Kornmasse zurückzuhalten, weil diese flussige Fraktion nun Wassersuspension ist. In diesem Fall stellt die flüssige Fraktion kein einfaches Wasser dar, wie es im traditionellen Produktionsverfahren vorgesehen ist, sondern ein Hydrosol, in dem Zucker, Dextrine, Aminosäuren, einige Eiweiße, Pektinstoffe, Mineralstoffe u.s.w. aufgelöst sind, was ebenfalls zur Erhöhung des biologischen Nährwerts von Teigwaren beiträgt.

Die Benutzung von vollen Weizenkörnern bei der Teigwarenproduktion ermöglichte es, dass 50% des Mehls durch Korn ersetzt werden können, was zur Senkung der Selbstkosten von Teigwaren führt, denn die Mehlproduktion ist eine teuere Produktionsart, wo das Ansteigen von Mehlkosten durch die Erhöhung der Mehlqualität verursacht wird. Die Senkung der Selbstkosten von Teigwaren bezieht sich auch darauf, dass teure Defizitsorten von hartem Weizen und ultraglasigem Brotweizen nun zum Teil oder ganz durch die weit verbreiteten weichen Mahlweizensorten ersetzt werden können.

Die Verarbeitung statt des speziellen Teigwarenmehls von gewöhnlichem Backmehl, dessen Feuchtigkeit nicht mehr als 14,5%, Weißfarbigkeit nicht weniger als 42 Messeinheiten und Kleberigkeit nicht weniger als 28% betragen, führt ebenfalls zur Senkung der Teigwaren-Selbstkosten.

Die Verarbeitung bei der Teigwarenproduktion von Kornmasse, die aus vollen Körnern zubereitet wurde, ermöglicht eine Erweiterung der Rohstoffbasis für die Teigwarenproduktion: Das angemeldete Verfahren lässt die Anfertigung von Teigwaren nicht nur aus harten, sondern auch aus weichen Mahlweizensorten zu, was früher nicht gemacht werden konnte.

Es ist nicht gelungen in der Wissenschaft und Technik bekannte Fertigungsverfahren von Teigwaren zu entdecken, die bei der Teigzubereitung die Verarbeitung von Weizenkörnern vorgesehen hätten, wo Weizenkörner am Anfang bis zur Keimbildung im Wasser eingequellt worden wären und nach dem Abzug des durch die Körner nicht gebundenen Wassers zur Wassersuspension der Kornmasse mit Teilchengröße von nicht mehr als 500 Mikrimeter zerkleinert worden wären, wobei während der Teigknetung das Weizenmehl nur mit Wassersuspension der Kornmasse angefeuchtet worden wäre, indem man das Weizenmehl nach und nach der Kornmasse zugegeben hätte.

Es wurde ein Produktionsverfahren von Vollkornbrot entdeckt (Patent der Russischen Föderation Nr. 1837778 und Patent der Russischen Föderation Nr. 1837779). Laut diesem Verfahren wird das Korn ebenfalls unter der Temperatur von 10 bis 40° im Wasser binnen 8 bis 20 Stunden bis zur Quellreife von 42% eingequellt. Anschließend wird es durch das Schneiden und Pressen zerkleinert und zerrissen und unter Druck von 0,1 bis 1,9 Mikropaskal durch eine Mätrize in der Dispergierungsanlage "Tonus" bis zur Teilchengröße der Kornmasse von 500 Mikrometer extrudiert. Jedoch hatte die in den oben genannten Patenten angemeldete Erfindung eine ganz andere Aufgabe zu lösen, und zwar sollte sie die Produktionstechnologie von Vollkornbrot erarbeiten, die eine schnelle Teiggärung ermöglichen und die Porenhaltigkeit im Brot erhöhen würde, was zur Verringerung der für die Anfertigung von Backwaren erforderlichen Zeit und zur Verbesserung der Qualität und der Haltigkeit von Backwaren führen würde. An das Teigwarenmehl werden jedoch spezifische Anforderungen im Bezug auf seine technologischen Qualitäten gestellt. Das Teigwarenmehl unterscheidet sich von dem Backmehl. Deswegen kann man behaupten, dass obwohl die Anfangsverarbeitung des Korns durch seine Einquellung im Wasser und die Zerkleinerung des quellreifen Korns bereits bekannt ist, legt das Korn, das auf solche Weise für die Benutzung in der Teigwarenproduktion zugerichtet wurde, neue Qualitäten an den Tag, die bei der Anfertigung von Backwaren bis her unbekannt waren. Die Kornmasse der gewonnenen Wassersuspension enthält grobe Teilchen der Alleuronkornschicht, die die gleichmäßige Verteilung des Klebers über den ganzen Teigquerschnitt verhindern. Diese Eigenschaft war in der Teigwarenproduktion noch nicht bekannt und wurde früher nie bei der Anfertigung des Nudelteiges berücksichtigt. Der Klebereiweiß, der in die flüssige Fraktion der Wassersuspension von der Kornmasse übergegangen war, gewehrleistet die strukturelle Bindung bei der Nudelteigknetung, da das Weizenmehl nur mit der Wassersuspension der Kornmasse anfgefeuchtet wird. Beim Vermischen der fertigen Kornmasse mit dem Weizenmehl kontaktiert das Mehl mit der freihen flüssigen Fraktion, die sich in der zerkleinerten Kornmasse befindet, wodurch die Bindung der freien flüssigen Suspension mit den Mehlkolloiden einleitet wird. Beim Kochen der nach dem angemeldeten Verfahren hergestellten Teigwaren wird die Mehlstärke nicht ausgewaschen, und das Produkt zerfällt im Wasser nicht. Außerdem ermöglichen die oben genannten Besonderheiten der Wassersuspension von Kornmasse eine Erweiterung der Rohstoffbasis für die Teigwarenproduktion, weil sie das Anfertigen von Teigwaren auch aus weit verbreiteten Mahlweizensorten zulassen. Diese Mahlweizensorten wurden vor der Erarbeitung des angemeldeten Produktionsverfahrens von Fachleuten als untauglich für die Teigwarenproduktion angesehen, weil die Struktur der aus diesem Mehl angefertigten Teigwarenprodukte sehr locker war. Dadurch konnten die Produkte keine feste Form behalten und und zerfielen beim Kochen. Wenn man aber unter Anleitung vom angemeldeten Verfahren zur Teigwarenproduktion einfache Mehlsorten verarbeitet, entsteht in den fertigen Teigwarenprodukten eine feste Struktur mit hohen organolyptischen Werten.

### Die beste Variante zur Realisierung der Erfindung

Für die Teigwarenproduktion nach dem angemeldeten Verfahren können sowohl die in der Teigwarenproduktion traditionell benutzten harten Weizensorten bzw. ultraglasige Brotweizensorten aber auch weiche Mahlweizensorten benutzt werden.

Das erfundene Verfahren wird in folgenden Schritten abgewickelt.

Das vorher von Fremd- und Mineralreststoffen befreite Weizenkorn wird traditionell z.B. in einer Schälanlage "UO-500" bearbeitet und anschließend gewaschen. Dabei wird bei der Schälung nur die Fruchthülse des Korns entfernt, ohne dass der Kornkeim beschädigt wird.

Nun werden die Weizenkeime im Wasser unter der Temperatur von 25 bis 45°C (Die Einquelltemperatur hängt von der Raumtemperatur ab.) eingequellt, bis das Korn Keime treibt. Die Quelldauer kann 8 bis 20 Stunden betragen. Die Masse des quellreifen Korns vergrößert sich um 40-50%.

Das ungebundene überflüssige Wasser, in dem das Korn eingequellt wurde, wird abgezogen.

Das angekeimte Korn kann mit Wasser unter Raumtemperatur zusätzlich abgespült werden. Das Wasser wird entfernt, indem man das Korn in ein Sieb legt und das Wasser frei abtropfen lässt.

Anschließend wird das feuchte Korn in eine Dispergierungsanlage z.B. in den Dispergator D 150 eingeliefert, wo es zur Wassersuspension der Kornmasse mit Teilchengröße von nicht mehr als 500 Mikrometer zerkleinert wird.

Als Ergebnis erhält man eine Wassersuspension der Kornmasse, die sowohl Teilchen der Alleuronenschicht des Korns, des Keimes als auch eine freie flussige Fraktion mit den im Wasser aufgelösten Dextrinen, Aminosäuren, einigen Eiweißen, Pektinstoffen, Mineralstoffen, Zucker u.s.w. enthalten.

Beim Kneten des Teiges von einer bestimmten Konsistenz, in unserem Fall von einer Flockenkonsistenz, bei der die Teigfeuchtigkeit je nach der Art des Erzeugnisses und der Mehlqualität von 28,0% bis 32,5% schwankt, wird der fertigen Wassersuspension der Kornmasse nach und nach Weizenmehl, Z.B. Backmehl, dessen Feuchtigkeit nicht mehr als 14,5%, Weißfarbigkeit nicht weniger als 42 Messeinheiten und Kleberigkeit nicht weniger als 28% betragen sowie auch Teigwarenmehl beigemischt, indem man das eingeschüttete Mehl mit der Wassersuspension der Kornmasse anfeuchtet.

Der Begriff "Kneten" wird hier relativ gebraucht. Im Teigwarenhalbautomat, z.B. Typ RT-PM-21-01, werden die Teigkomponenten nur zu einer flockogen Masse vermischt. Dabei werden zuerst Mehl und die Wassersuspension der Kornmasse nach und nach vermischt, indem das Weizenmehl beim Teigkneten nach und nach zu der Wassersuspension der Kornmasse dazugeschüttet wird. Dann wird die flockige Teigmasse allmählig eingedickt und plastifiziert. Dadurch erhält sie solche Strukturen und Qualitäten, die für die nachfolgende Formgebung der Teigwaren notwendig sind. Der fertige Teig wird in die Matrizenvorkammer verlagert und durch die Martizenöffnungen in Teigwarenpridukte gepresst. Das Teigwarenformen und anschließendes vorwiegend aktives Teigwarentrocknen wird in einer Teigwaren-Trocknungsanlage, z.B. in dem Elektrotrockner ESPIR 3 "Fermer" nach der traditionellen Trocknungstechnologie für die Teigwaren durchgeführt.

### Beispiel 1.

Hier erfolgt die Verarbeitung von Kasachischem Brotweizen mit der Klebrigkeit von 26% (Die Deformierungsquote des Klebers beträgt 75 Messeinheiten), mit der Glasigkeit von 56%. Es wurde auch Brotweizenmehl, dessen Feuchtigkeit 14,5%, Weißfarbigkeit 58 Messeinheiten, Klebrigkeit 28% betragen (Mahlweizenmehl der besten Qualität), verarbeitet.

Das vorher von Fremd- und Mineralreststoffen befreite und gewaschene Weizenkorn wurde im Wasser unter der Temperatur von 42°C (Die Raumtemperatur betrug 25°C) eingequellt, bis das Korn Keime trieb. Die Quelldauer betrug 14 Stunden.

Sobald das Korn ankeimte, wurde das ungebundene Wasser abgezogen, d.h. das überflüssige Wasser wurde entfernt, indem man das Korn in ein Sieb gelegt hatte. Anschließend wurde das Korn mit 20°C-warmem Wasser abgespült. Das überflüssige Wasser wurde wieder entfernt, indem man das Korn wieder in ein Sieb gelegt hatte. Anschließend wurde das Korn in den Dispergator D 150 eingeliefert, wo es zur Wassersuspension der Kornmasse mit Teilchengröße von 480 Mikrometer zerkleinert wurde.

Für die Zubereitung des Teiges von einer Flockenkonsistenz mit der Teigfeuchtigkeit von etwa 29% wurden im Teigwarenhalbautomat RT-PM-21-01 3 kg der fertigen Wassersuspension der Kornmasse mit 1,7 kg Brotweizenmehl bester Qualität vermischt, indem man das Mehl nach und nach in die Wassersuspension der Kornmasse schüttete und es mit dieser Suspension beim Teigkneten anfeuchtete. Es entstand ein Flockenteig, der zu Teigwaren weiter verarbeitet werden konnte. Aus dem geformten Teig wurden Hörnchen gepresst. Die Masse der Teigwaren betrug vor dem Trocknen 4,7 kg. Die Teigwaren wurden im Elektrotrockner ESPIR 3 "Fermer" binnen 45 Minuten aktiv getrocknet. Die Anfangstemperatur betrug 87°C, dann wurde sie allmählig auf 50°C zurückgestellt. Die Masse der Fertigprodukte betrug 3,42 kg. Die Fertigprodukte hatten gelbe Farbe mit cremefarbiger Schattierung und eine angenehme glatte Oberfläche. Beim Kochen behalten sie ihre Form bei, haben einen angenehmen Geschmack und gute Nährhaftigkeit.

### Beispiel 2.

Das Herstellungsverfahren wurde in der gleichen Weise wie im Beispiel 1 befolgt. Es wurden aber Weizenkörner des Mahlgutes verarbeitet, das zu 65% aus dem Kasachischen Brotweizen mit der Klebrigkeit von 26% (Die Deformierungsquote des Klebers beträgt 75 Messeinheiten) und zu 35% aus gewöhnlichem Brotweizen (Anbauflächen in Tula und Lipezk) mit der Klebrigkeit von 21-22% (Die Deformierungsquote des Klebers beträgt 85 Messeinheiten) bestand. Es wurde auch Brotweizenmehl, dessen Feuchtigkeit 14,5%, Weißfarbigkeit 42 Messeinheiten, Klebrigkeit 30% betrugen (Mahlweizenmehl der ersten Qualität), verarbeitet.

Für die Zubereitung des Teiges von einer bestimmten Flockenkonsistenz mit der Teigfeuchtigkeit von etwa 30% wurden in der Teigwarenschneckenpresse 3 kg der fertigen Wassersuspension der Kornmasse mit 2,4 kg Brotweizenmehl erster Qualität vermischt. Es entstand Flockenteig, der zu Teigwaren weiter verarbeitet werden konnte.

Die Masse der zu Hörnchen geformten Teigwaren betrug vor dem Trocknen 5,4 kg. Die Teigwaren wurden in der Trocknungsanlage binnen 50 Minuten aktiv getrocknet. Die Anfangstemperatur betrug 87°C, dann wurde sie allmählig auf 50°C zurückgestellt. Die Masse der Fertigprodukte betrug 4,1 kg. Die Fertigprodukte hatten gelbe Farbe mit leichter grauer Schattierung und eine angenehme glatte Oberfläche. Beim Kochen behalten sie ihre Form gut bei, haben einen angenehmen Geschmack und gute Nährhaftigkeit.

### Beispiel 3.

Das Herstellungsverfahren wurde in der gleichen Weise wie im Beispiel 1 befolgt. Es wurden aber harte Weizenkörner (Anbaugebiet Orenburg) verarbeitet: Glasigkeit - 80%, Klebrigkeit - 26%, Deformierungsquote des Klebers - 80 Messeinheiten. Es wurde auch Brotweizenmehl, dessen Feuchtigkeit 14,5%, Weißfarbigkeit 58 Messeinheiten, Klebrigkeit 28% betrugen (Mahlweizenmehl der besten Qualität), verarbeitet.

Für die Zubereitung des Nudelteiges von einer bestimmten Flockenkonsistenz mit der Teigfeuchtigkeit von etwa 29% wurden in dem Teigautomat der Teigwarenschneckenpresse 3 kg fertiger Wassersuspension der Kornmasse mit 2,5 kg Brotweizenmehl erster Qualität vermischt. Es entstand Flockenteig, der zu Teigwaren weiter verarbeitet werden konnte.

Die Masse der zu Hörnchen geformten Teigwaren betrug vor dem Trocknen 5,5 kg. Die Teigwaren wurden in der Trocknungsanlage binnen 50 Minuten aktiv getrocknet. Die Anfangstemperatur betrug 87°C, dann wurde sie allmählig auf 50°C zurückgestellt. Die Masse der Fertigprodukte betrug 4,2 kg. Die Produkte hatten eine gelbe Farbe und eine angenehme glatte Oberfläche. Beim Kochen behalten sie ihre Form gut bei, haben einen angenehmen Geschmack und gute Nährhaftigkeit,

### Anwendung in der Produktion

Die oben angeführten Informationen zeugen davon, dass die angemeldete Erfindung die folgenden Bedingungen erfüllt:
- das in der Erfindung angemeldete Verfahren ("das Produkrionsverfahren der Teigwaren")gehört zum Bereich der Nahrungsmittelindustrie, genauer gesagt zum Bereich Teigwarenindustrie, und kann für die Anfertigung und Produktion von Teigwaren mit erhöhtem biologischem Nährwert aus Mahlweizen, darunter aus weit verbreiteten Weichweizensorten eingesetzt werden;
- das angemeldete Verfahren, in der Form, wie es im Unabhängigen Punkt "Erfindungsformel", geschildert wird, kann mit Hilfe der in der Anmeldung beschriebenen und vor dem Prioritätsdatum bekannter Wege und Mittel realisiert werden;
- das erfundene Verfahren kann bei seiner Realisierung das von dem Erfindungsanmelder vorgesehene Ergebnis erzielen: die Erzeugung von Teigwaren mit hohem biologischem Nährwert und niedrigen Selbstkosten, sowie auch Erweiterung der Rohstoffbasis der Teigwarenindustrie durch weiche Mahlweizensorten, die früher für die Anfertigung von Teigwaren nicht benutzt woden sind, die Schaffung von "fester" Teigwarenstruktur mit hohen organolyptischen Werten.

## Patentansprüche

1. Das Produktionsverfahren der Teigwaren besteht darin, dass beim Anfeuchten des Weizenmehls mit Wasser ein Teig von bestimmter Konsistenz geknetet wird und später zu Teigwaren geformt und getrocknet wird. Es zeichnet sich dadurch aus, dass am Anfang im Wasser volle Weizenkörner bis zur Ankeimung eingequellt werden, dann das überflüssige Wasser abgezogen wird und die Körner zu einer Wassersuspension der Kornmasse mit der Teilchengröße von höchstens 500 Mikrometer zerkleinert werden. Das Weizenmehl wird mit dem Wasser der Kornmassesuspension angefeuchtet, indem es bei der Teigknetung nach und nach der Suspension zugefügt wird.

2. Das Produktionsverfahren der Teigwaren erfolgt wie im Punkt 1 und unterscheidet sich nur dadurch, dass man harte und/oder weiche Mehlweizensorten verarbeitet.

3. Das Produktionsverfahren der Teigwaren erfolgt wie im Punkt 1 und unterscheidet sich nur dadurch, dass Backmehl, dessen Feuchtigkeit 14,5%, Weißfarbigkeit nicht weniger als 42 Messeinheiten und Klebrigkeit nicht weniger als 28% betragen, und/oder Teigwarenmehl verarbeiten werden.

4. Das Produktionsverfahren der Teigwaren erfolgt wie im Punkt 1 und unterscheidet sich nur dadurch, dass man vor der Zerkleinerung die Weizenkeime noch einmal mit Wasser abspült und anschließend das Wasser entfernt, indem man es abtropfen lässt.
